# FASCICULE DE BREVET EUROPEEN

(11) **EP 3 052 986 B1**
(45) Date de publication et mention de la délivrance du brevet: **13.12.2017**
(21) Numéro de dépôt: 14787223.8
(22) Date de dépôt: 26.09.2014
(51) Int. Cl.: G03B 21/10, G03B 21/20, G03B 21/28, G03B 21/62, G03B 33/06, H04N 9/31, B60R 11/02

(54) **DISPOSITIF D'AFFICHAGE EN RETROPROJECTION**
ANZEIGEVORRICHTUNG MIT RÜCKPROJEKTION
REAR PROJECTION DISPLAY DEVICE

(30) Priorité: 03.10.2013 FR 1359576
(43) Date de publication de la demande: 10.08.2016
(73) Titulaire: Commissariat à l'Energie Atomique et aux Energies Alternatives, 75015 Paris (FR); Renault S.A.S., 92100 Boulogne-Billancourt (FR)
(72) Inventeur: ROSSINI, Umberto, F-38500 Coublevie (FR); GETIN, Stéphane, F-38100 Grenoble (FR); PERTENAIS, Martin, F-40100 Dax (FR); SERMET, Frédéric, F-38430 Saint Jean De Moirans (FR); REGNIER, Stéphane, F-91370 Verrieres Le Buisson (FR)
(74) Mandataire: Thibon, Laurent
(86) Numéro de dépôt international: PCT/FR2014/052436
(87) Numéro de publication internationale: WO 2015/049443

(56) Documents cités:
- WO-A1-99/04576
- DE-U1- 20 112 031
- US-A- 4 582 394
- US-A- 5 187 597

## Description

La présente demande de brevet revendique la priorité de la demande de brevet français FR13/59576 qui sera considérée comme faisant partie intégrante de la présente description.

### Domaine

La présente demande concerne un dispositif d'affichage en rétroprojection. Plus particulièrement, la présente demande concerne un tel dispositif d'affichage susceptible d'être intégré dans un habitacle de véhicule.

### Exposé de l'art antérieur

Les dispositifs d'affichage en rétroprojection sont avantageusement compatibles avec différents supports de rétroprojection, encore appelés écrans. Notamment, ils sont compatibles avec des supports de rétroprojection courbes ou de formes complexes. Ces dispositifs sont donc particulièrement adaptés à la fourniture d'informations dans des habitacles de véhicules, par exemple des automobiles. En effet, des dispositifs d'affichage en rétroprojection peuvent être par exemple intégrés au niveau de la console centrale d'un habitacle automobile ou encore au dessus de cette console centrale.

Cependant, des contraintes importantes existent sur des dispositifs intégrés dans des habitacles de véhicules : ces dispositifs doivent notamment être relativement compacts et être assez directionnels pour éviter des projections en direction d'éléments réfléchissants tels que le pare-brise ou les vitres latérales. En outre, ces dispositifs doivent assurer la production d'un flux lumineux en sortie suffisant pour éviter des problèmes de lisibilité lorsque le véhicule est placé sous un éclairement de luminosité importante, par exemple en provenance du soleil.

Pour limiter des problèmes de lisibilité, on prévoit généralement une casquette au-dessus des écrans d'affichage dans des habitacles de véhicule. Cependant, cette solution n'est pas adaptée à l'intégration d'un écran sur une surface importante, par exemple au niveau de la console centrale du véhicule.

Des exemples de dispositifs d'affichage en rétroprojection sont décrits dans les documents DE20112031U1 et US4582394.

### Résumé

Un objet d'un mode de réalisation est de prévoir un dispositif d'affichage en rétroprojection palliant tout ou partie des inconvénients des dispositifs connus et fonctionnant sans besoin d'une casquette supérieure.

Un autre objet d'un mode de réalisation est de proposer un tel dispositif d'affichage compatible avec un écran de sortie courbe, présentant un flux lumineux de sortie élevé, évitant des projections parasites, compact et particulièrement bon marché.

Ainsi, un mode de réalisation prévoit un dispositif d'affichage en rétroprojection comprenant une source lumineuse mobile délivrant un faisceau lumineux à au moins une longueur d'onde, un miroir holographique réflectif uniquement à cette longueur d'onde, un écran absorbant et un diffuseur transmissif, l'écran absorbant étant placé sur la face arrière du miroir holographique, les éléments étant agencés de façon que le faisceau issu de la source lumineuse se réfléchit sur le miroir holographique pour balayer la surface du diffuseur transmissif.

Selon un mode de réalisation, la source lumineuse est une source laser.

Selon un mode de réalisation, le dispositif comprend en outre un miroir plan sur le trajet du faisceau lumineux entre la source et le miroir holographique.

Selon un mode de réalisation, la source lumineuse délivre un faisceau lumineux à une première longueur d'onde de couleur rouge, une deuxième longueur d'onde de couleur bleue, et une troisième longueur d'onde de couleur verte.

Selon un mode de réalisation, la source lumineuse est montée mobile selon deux axes.

Selon un mode de réalisation, le miroir holographique est constitué d'un film comprenant, dans son volume, des miroirs de Bragg.

Selon un mode de réalisation, le miroir holographique est constitué d'un film comprenant, dans son volume, des cavités de type Fabry Pérot.

Selon un mode de réalisation, l'écran absorbant est un écran noir.

Selon un mode de réalisation, le dispositif comprend en outre un boîtier dans lequel sont intégrés la source lumineuse mobile, le miroir holographique et l'écran absorbant, une ouverture étant définie dans le boîtier au niveau de laquelle est placé le diffuseur transmissif.

Selon un mode de réalisation, le diffuseur transmissif a une surface courbe.

Selon un mode de réalisation, le diffuseur transmissif est un diffuseur holographique.

Un autre mode de réalisation prévoit un véhicule comprenant une console centrale dans laquelle est intégré un dispositif d'affichage en rétroprojection du type susmentionné.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre une portion d'un tableau de bord d'un véhicule, par exemple une automobile ;
la figure 2 illustre un dispositif d'affichage en rétroprojection ;
la figure 3 illustre un inconvénient du dispositif d'affichage en rétroprojection de la figure 2 ; et
la figure 4 illustre un dispositif d'affichage en rétroprojection selon un mode de réalisation.

Par souci de clarté, de mêmes éléments ont été désignés par de mêmes références aux différentes figures et, de plus, comme cela est habituel dans la représentation des systèmes optiques, les diverses figures ne sont pas tracées à l'échelle.

### Description détaillée

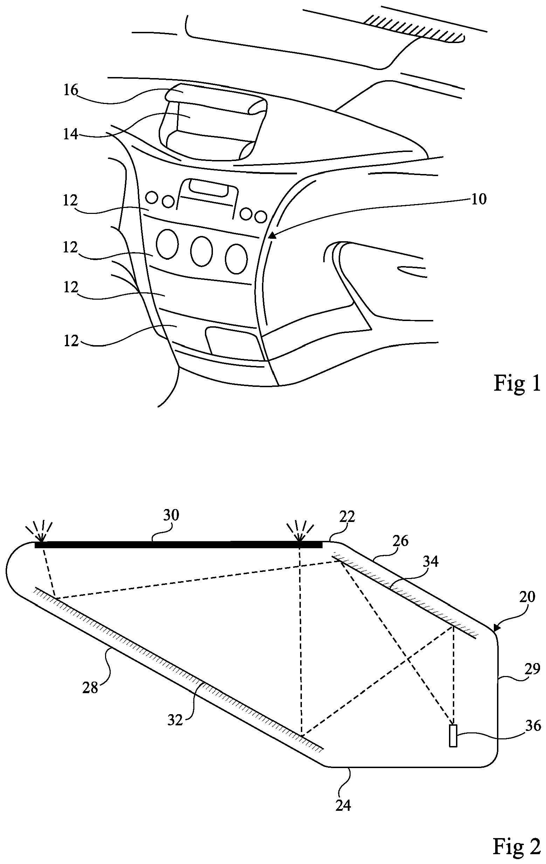

La figure 1 illustre une portion de l'avant de l'habitacle d'un véhicule, par exemple une voiture. Dans cette figure est représentée une console centrale 10 comprenant plusieurs sections 12, chaque section comprenant soit des écrans d'affichage d'informations, soit des boutons. La console centrale 10 comprend en outre une portion supérieure comprenant une cavité au fond de laquelle est prévu un écran d'affichage 14. La cavité est surmontée d'une casquette 16.

Le dispositif d'affichage par rétroprojection que l'on propose ici est particulièrement adapté à remplacer au choix l'écran 14 ou des écrans placés au niveau des sections 12 de la console centrale 10, ou à remplacer l'ensemble des sections de la console centrale. Dans le cas où le système de rétroprojection proposé ici est utilisé en remplacement de l'écran supérieur 14, on notera que la présence de la casquette 16 n'est pas nécessaire, le dispositif étant prévu de façon assez directionnelle pour ne pas projeter d'informations à destination du pare-brise ou des fenêtres latérales et étant en outre assez lumineux pour être lisible lorsque l'écran est atteint par des rayons lumineux ambiants parasites, par exemple en provenance du soleil.

En outre, le dispositif d'affichage en rétroprojection proposé ici, s'il est utilisé au niveau de la console centrale 10, en remplacement ou à côté des sections 12, peut être utilisé pour afficher des informations à destination du conducteur du véhicule et/ou de ses passagers. Avantageusement, le dispositif d'affichage proposé ici peut avoir un écran de sortie de forme courbe et ainsi être intégré dans l'habitacle, et notamment dans la console centrale, sans "coutures", c'est-à-dire en un seul bloc en façade de la console centrale.

La figure 2 illustre un dispositif d'affichage en rétroprojection susceptible d'être utilisé dans l'habitacle automobile d'un véhicule, par exemple au niveau de la console centrale de celui-ci.

Le dispositif comprend un boîtier 20 au sein duquel sont intégrés des éléments de projection du dispositif de rétroprojection. Dans l'exemple représenté, le boîtier 20 est défini par deux premières parois sensiblement parallèles, 22 et 24, deux deuxièmes parois sensiblement parallèles l'une à l'autre 26 et 28, et une troisième paroi 29. Les parois 26 et 28 forment un angle non droit avec les parois 22 et 24 et, plus particulièrement, l'angle entre la paroi 26 et la paroi 22 est un angle obtus et l'angle entre la paroi 22 et la paroi 28 est un angle aigu. La paroi 29 est perpendiculaire aux parois 22 et 24 et est positionnée entre les parois 24 et 26. La paroi 24 est légèrement moins longue que la paroi 22 et la paroi 26 est légèrement moins longue que la paroi 28 dans le plan de la figure 2.

Le boîtier 20 comprend une ouverture de sortie dans la paroi 22 dans laquelle est positionné un écran 30 d'affichage en rétroprojection. La face arrière de l'écran 30, destinée à recevoir une image projetée par une source lumineuse, est tournée vers l'intérieur du boîtier, alors que sa face avant, destinée à être visualisée par un utilisateur, est dirigée vers l'extérieur du boîtier. L'écran 30 est essentiellement constitué d'un diffuseur transmissif, c'est-à-dire d'une feuille, plaque ou film transmettant, vers sa face avant, la lumière éclairant sa face arrière, en diffusant plus ou moins fortement cette lumière. Le cône de sortie du diffuseur est par exemple centré sur la direction de propagation de la lumière éclairant sa face arrière, c'est-à-dire que lorsque le diffuseur reçoit, du côté de sa face arrière, un faisceau lumineux sous incidence normale, l'intensité du faisceau émis par le diffuseur du côté de sa face avant est maximale dans un axe normal à l'écran, et décroit au fur et à mesure que l'angle de propagation de la lumière diffusée s'écarte de la normale à l'écran. Toutefois, à titre de variante, le diffuseur peut être tel que l'axe principal de diffusion forme un angle non nul avec la direction de propagation de la lumière éclairant sa face arrière. A titre d'exemple, le diffuseur de l'écran 30 est un diffuseur holographique transmissif adapté à transmettre des rayons qui l'atteignent du côté de l'intérieur du boîtier 20 vers l'extérieur du boîtier 20 avec une diffusion contrôlée de ces rayons. A titre de variante, le diffuseur de l'écran 30 peut être un diffuseur non holographique, par exemple un diffuseur comprenant un miroir structuré de type Fresnel dont la surface présente une granulométrie de taille caractéristique nettement inférieure au diamètre du faisceau d'éclairement.

A l'intérieur du boîtier sont prévus, dans cet exemple, deux miroirs plans réfléchissants 32 et 34 positionnés respectivement le long de la paroi 28 et de la paroi 26. Une source lumineuse laser mobile 36 est positionnée sensiblement à l'angle entre les parois 24 et 29. La source laser 36 est positionnée de façon à éclairer le miroir 34, de sorte que le faisceau réfléchi par le miroir 34 atteigne le miroir 32, et que le faisceau réfléchi par le miroir 32 atteigne le diffuseur transmissif 30. La source mobile 36 est par exemple un pico-projecteur du type désigné dans la technique par le sigle LBS (de l'anglais "Light Beam Steering" - faisceau lumineux dirigé), comprenant une source laser et un miroir mobile selon un ou deux axes réalisé en technologie MEMS. Comme cela est représenté en figure 2, la source 36 est montée mobile en rotation selon au moins deux axes de façon à pouvoir balayer l'ensemble de la surface du diffuseur 30, par l'intermédiaire des réflexions successives sur les miroirs 34 et 32.

Le positionnement du miroir 32 par rapport au diffuseur transmissif 30, selon un angle aigu, permet la réalisation d'une projection sans déformation (un carré donne un carré). Pour limiter l'encombrement, le miroir 32 est de préférence placé relativement face au diffuseur transmissif.

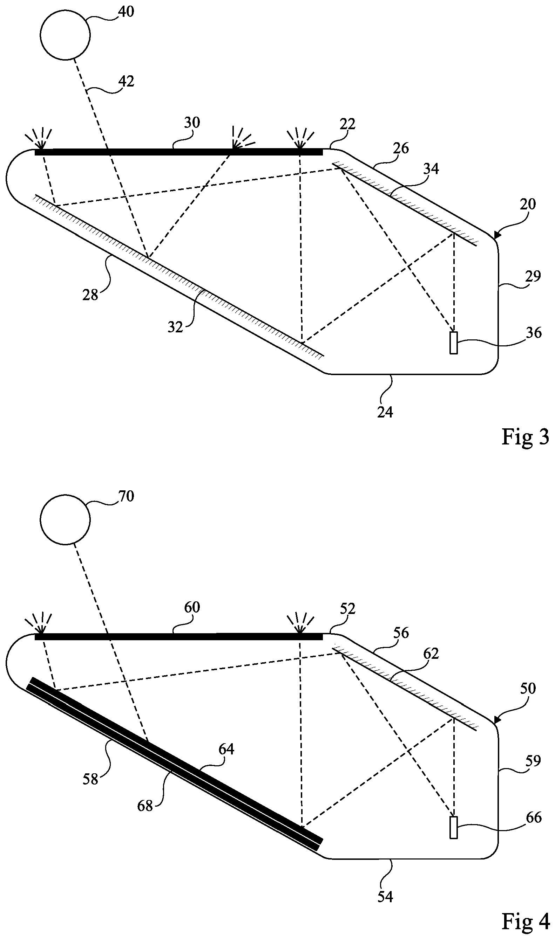

La figure 3 illustre un inconvénient du dispositif de la figure 2.

En figure 3 est repris la structure du boîtier 30 et l'ensemble des éléments qui constituent ce boîtier et qui sont formés dans ce boîtier 30. Une source lumineuse parasite 40, par exemple la lumière issue du soleil, est placée dans cet exemple en regard du diffuseur transmissif 30.

La source lumineuse parasite 40 émet un rayon 42 qui traverse le diffuseur transmissif 30, atteint le miroir 32 et est réfléchi par celui-ci en direction du diffuseur transmissif 30. En effet, un diffuseur transmissif transmet la lumière dans les deux sens en la diffusant. Ainsi, la source lumineuse parasite 40 crée un faisceau parasite en sortie du diffuseur 30, à destination d'un observateur. Dans le cas où la source parasite 40 implique une lumière ambiante intense, une diffusion parasite sur toute l'image affichée peut être générée par ce phénomène.

On notera que la forme du boîtier 20, ainsi que le nombre et l'agencement des miroirs contenus dans le boîtier, ne sont décrits ici qu'à titre d'exemple, seule l'association de la source ou pico-projecteur 36, du diffuseur transmissif 30 et des éléments amenant le faisceau issu de la source lumineuse 36 vers le diffuseur 30 important ici. Plus généralement, l'idée est d'amener le faisceau émis par la source 36 jusqu'à la face arrière du diffuseur 30, en repliant plus ou moins ce faisceau au moyen d'un ou plusieurs miroirs, par exemple disposés sur des faces du boîtier, en fonction des contraintes d'encombrement. Pour cela, d'autres dispositions que celles représentées sur les figures peuvent être prévues.

Ainsi, un besoin existe d'un dispositif assurant une rétroprojection et limitant les effets parasites ci-dessus.

La figure 4 illustre un dispositif de rétroprojection selon un mode de réalisation.

Dans cette figure est illustré un boîtier 50 similaire au boîtier 20 décrit en relation avec la figure 2. Le boîtier 50 est constitué d'un ensemble de parois : une paroi 52 parallèle à une paroi 54, une paroi 56 parallèle à une paroi 58, et une paroi 59 perpendiculaire aux parois 52 et 54. La paroi 52 est plus longue que la paroi 54 et la paroi 58 est plus longue que la paroi 56. La paroi 58 forme avec la paroi 52 un angle aigu et la paroi 56 forme avec la paroi 54 un angle obtus. La paroi 59, perpendiculaire à la paroi 54, est en contact avec les parois 56 et 54 pour fermer le boîtier 50. Comme indiqué ci-dessus, cet agencement n'est qu'un exemple de réalisation. L'homme de l'art saura prévoir d'autres agencements permettant d'obtenir l'effet recherché.

Dans la paroi 52 est définie une ouverture dans laquelle est positionné un diffuseur transmissif 60. Le long de la paroi 56 est prévu un miroir plan 62 et, dans l'angle entre les parois 54 et 59, est prévue une source lumineuse 66.

La source 66 est de préférence une source laser, par exemple constituée d'un pico-projecteur de type LBS, mobile selon au moins deux axes. D'autres sources lumineuses, de préférence des sources laser, peuvent toutefois être prévues. A titre d'exemple, un pico projecteur non LBS, dont les sources sont des diodes laser plutôt que des LED classiques peut être utilisé. A titre de variante, une source non laser mais présentant un spectre étroit, par exemple une LED ayant un spectre de l'ordre de 30 nm de large ou moins à mi-hauteur pourrait convenir. Ainsi, la source 66 est prévue mobile de façon à balayer au moins une partie de la surface du miroir 62. De façon classique, la source 66 est une source lumineuse couleur en sortie de laquelle le faisceau laser peut contenir trois longueurs d'ondes, une longueur d'onde correspondant à la couleur verte, une longueur d'onde correspondant à la couleur bleue, et une longueur d'onde correspondant à la couleur rouge.

Le long de la paroi 58, en remplacement du miroir 32 des figures 2 et 3, est prévu un miroir holographique 64. Sur la face arrière du miroir holographique 64 est positionné un écran noir absorbant 68. Le positionnement du miroir holographique 64 et du miroir 62 est prévu de façon que les faisceaux issus de la source lumineuse 66 et se réfléchissant sur la surface du miroir 62 soient réfléchis par le miroir holographique 64 de façon à balayer l'ensemble de la surface du diffuseur transmissif 60.

Pour éviter les problèmes de réflexions parasites décrits ci-dessus, on prévoit un miroir holographique 64 paramétré de façon que celui-ci ne réfléchisse que les longueurs d'ondes correspondant aux couleurs rouge, verte et bleue issues de la source 66. Le miroir holographique 64 réfléchit donc trois longueurs d'ondes bien précises, et transmet les autres longueurs d'ondes. Plus généralement, le miroir holographique 64 est paramétré pour réfléchir uniquement la ou les longueurs d'onde de la source 66 (la source 66 peut également être monochrome).

Ainsi, si un faisceau parasite issu d'une source lumineuse 70 placée à l'extérieur du boîtier 50 pénètre dans le boîtier 50 par l'intermédiaire du diffuseur transmissif 60 et atteint l'ensemble constitué du miroir holographique 64 et de l'écran noir 68, le miroir holographique 64 transmet l'ensemble des longueurs d'ondes en dehors de la ou des longueurs d'onde de la source 66 en direction de l'écran noir 68 et ne réfléchit que la ou les longueurs d'onde de la source 66. Ainsi, toutes les longueurs d'ondes hormis les longueurs d'onde de la source 66 sont absorbées par l'écran noir 68.

Dans notre exemple, seules les trois longueurs d'ondes de la source lumineuse 66 sont réfléchies par le miroir holographique 64. On notera que cette réflexion parasite, même si elle atteint le diffuseur 60 après réflexion sur le miroir holographique 64, est relativement peu gênante car seule une faible part de l'intensité lumineuse parasite incidente est réfléchie de cette façon.

Ainsi, le miroir holographique 64 réfléchit uniquement la ou les longueurs d'ondes présélectionnées du laser issu de la source 66. Pour obtenir un tel miroir holographique, on peut notamment utiliser un film qui, dans son volume, comprend un certain nombre de miroirs de Bragg, ces miroirs étant prévus de façon à réfléchir spécifiquement la ou les longueurs d'ondes issues de la source lumineuse 66. On peut également prévoir d'utiliser, pour obtenir le miroir holographique 64, un film mince comprenant des cavités de type Fabry Pérot correctement paramétrées.

Avantageusement, l'utilisation d'un empilement d'un miroir holographique 64 réflectif aux longueurs d'ondes issues de la source 66 assure une diffusion parasite correspondant à environ 2 % de la diffusion parasite dans le cas où le dispositif ne comprend qu'un miroir classique. On notera que la source laser 66 peut être constituée d'une seule source fournissant trois longueurs d'onde distinctes ou de trois sources lasers indépendantes fournissant chacune une longueur d'onde désirée. Dans l'autre sens, le faisceau issu de la source laser 66 réfléchi sur le miroir 62 puis sur le dispositif 64/68, présente, en sortie du dispositif, une perte potentielle de luminance par rapport au dispositif de la figure 2 inférieure à 5 %. Cependant, le contraste obtenu peut être fortement augmenté.

A titre d'exemple d'applications numériques pour le dispositif de la figure 4, on peut prévoir un diffuseur 60, positionné dans la figure horizontalement, d'une longueur de l'ordre de 138 mm. L'ensemble constitué du miroir holographique 64 et de l'écran noir 68 peut avoir une longueur, dans le plan de la figure, de l'ordre de 134 mm. Le miroir plan 62 peut avoir une dimension de l'ordre de 52 mm, et la source laser 66 peut être positionnée à la verticale du miroir 62 à une distance de 67 mm de celui-ci. Le miroir 62 est positionné par rapport à la source laser 66 de façon que la source laser balaye le miroir 62 avec une incidence variant entre 28° et 55°.

De la même façon, le faisceau réfléchi par le miroir 62 en direction de l'ensemble 64/68 atteint le miroir holographique 64 avec un angle variant entre 28° et 55°. A titre d'exemple, l'angle formé entre le miroir 62 et l'horizontale, ainsi que l'angle formé entre les éléments 64/68 et l'horizontale, peut être de l'ordre de 29°. La distance séparant les plans contenant les parois 52 et 54 peut être de l'ordre de 101 mm. On notera que l'ensemble de ces dimensions ne sont données ici qu'à titre d'exemple, et sont données relativement les unes par rapport aux autres et avec une tolérance de 10 %. Ainsi, on peut prévoir les dispositifs plus ou moins grands respectant les différents rapports de dimensions proposés ici. On notera que les dimensions mentionnées ci-dessus à titre d'exemple ont été définies à partir des performances de déviation du laser. De plus, comme indiqué ci-dessus, les modes de réalisation ne se limitent pas à l'exemple d'agencement des divers éléments représentés sur les figures.

Des modes de réalisation particuliers ont été décrits. Diverses variantes et modifications apparaîtront à l'homme de l'art. En particulier, on notera que la forme du boîtier 50 pourra être différente de la forme proposée ici, en fonction des applications désirées. L'idée proposée ici est d'associer une source d'un faisceau laser à une ou plusieurs longueurs d'ondes prédéfinies à destination d'un diffuseur transmissif 60, un miroir holographique réflectif uniquement aux longueurs d'onde du faisceau laser dont la face arrière est recouverte d'un écran noir 68 étant prévu sur le trajet du faisceau laser.

Ainsi, le miroir 62 peut être optionnel si on utilise une structure de boîtier différente de celle proposée ici. On notera cependant que le positionnement de l'ensemble 64/68 par rapport au diffuseur transmissif 60, selon un angle aigu, permet la réalisation d'une projection sans déformation (un carré donne un carré). Ce positionnement dans un boîtier compact peut impliquer la réalisation de plusieurs réflexions du faisceau laser avant d'atteindre le diffuseur transmissif 60.

En outre, la source laser 66 pourra être remplacée par toute source lumineuse susceptible de fournir un faisceau selon au moins une longueur d'onde, le miroir holographique 64 étant prévu pour réfléchir la ou les longueurs d'ondes de la source lumineuse uniquement, et pour transmettre les autres longueurs d'onde.

## Revendications

1. Dispositif d'affichage en rétroprojection comprenant une source lumineuse mobile (66) délivrant un faisceau lumineux à au moins une longueur d'onde, un miroir holographique (64) réflectif uniquement à ladite au moins une longueur d'onde, un écran absorbant (68) et un diffuseur transmissif (60), l'écran absorbant (68) étant placé sur la face arrière du miroir holographique (64), les éléments étant agencés de façon que le faisceau issu de la source lumineuse (66) se réfléchit sur le miroir holographique (64) pour balayer la surface du diffuseur transmissif (60).

2. Dispositif selon la revendication 1, dans lequel la source lumineuse (66) est une source laser.

3. Dispositif selon la revendication 1 ou 2, comprenant en outre un miroir plan (62) sur le trajet du faisceau lumineux entre la source (66) et le miroir holographique (64).

4. Dispositif selon l'une quelconque des revendications 1 à 3, dans lequel la source lumineuse (66) délivre un faisceau lumineux à une première longueur d'onde de couleur rouge, une deuxième longueur d'onde de couleur bleue, et une troisième longueur d'onde de couleur verte.

5. Dispositif selon l'une quelconque des revendications 1 à 4, dans lequel la source lumineuse (66) est montée mobile selon deux axes.

6. Dispositif selon l'une quelconque des revendications 1 à 5, dans lequel le miroir holographique (64) est constitué d'un film comprenant, dans son volume, des miroirs de Bragg.

7. Dispositif selon l'une quelconque des revendications 1 à 6, dans lequel le miroir holographique (64) est constitué d'un film comprenant, dans son volume, des cavités de type Fabry Pérot.

8. Dispositif selon l'une quelconque des revendications 1 à 7, dans lequel l'écran absorbant (68) est un écran noir.

9. Dispositif selon l'une quelconque des revendications 1 à 8, comprenant en outre un boîtier (50) dans lequel sont intégrés la source lumineuse mobile (66), le miroir holographique (64) et l'écran absorbant (68), une ouverture étant définie dans le boîtier (50) au niveau de laquelle est placé le diffuseur transmissif (60).

10. Dispositif selon l'une quelconque des revendications 1 à 9, dans lequel le diffuseur transmissif (60) a une surface courbe.

11. Dispositif selon l'une quelconque des revendications 1 à 10, dans lequel le diffuseur transmissif (60) est un diffuseur holographique.

12. Véhicule comprenant une console centrale dans laquelle est intégré un dispositif selon l'une quelconque des revendications 1 à 11.

## Patentansprüche

1. Eine Rückprojektionsanzeigevorrichtung, die Folgendes aufweist: eine mobile Lichtquelle (66), welche einen Lichtstrahl mit mindestens einer Wellenlänge liefert, einen holographischen Spiegel (64), welcher nur die mindestens eine Wellenlänge reflektiert, einen absorbierenden Schirm (68) und einen durchlässigen Diffusor (60), wobei der absorbierende Schirm (68) auf der Rückseite des holographischen Spiegels (64) platziert ist und die Elemente so angeordnet sind, dass der Strahl von der Lichtquelle (66) auf dem holographischen Spiegel (64) reflektiert wird, um die Oberfläche des durchlässigen Diffusors (60) zu scannen.

2. Vorrichtung nach Anspruch 1, wobei die Lichtquelle (66) eine Laserquelle ist.

3. Vorrichtung nach Anspruch 1 oder 2, die ferner einen ebenen Spiegel (62) auf dem Pfad des Lichtstrahls zwischen der Quelle (66) und dem holografischen Spiegel (64) aufweist.

4. Vorrichtung nach einem der Ansprüche 1 bis 3, wobei die Lichtquelle (66) einen Lichtstrahl mit einer ersten roten Wellenlänge, einer zweiten blauen Wellenlänge und einer dritten grünen Wellenlänge liefert.

5. Vorrichtung nach einem der Ansprüche 1 bis 4, wobei die Lichtquelle (66) aufgebaut ist, um entlang zweier Achsen mobil zu sein.

6. Vorrichtung nach einem der Ansprüche 1 bis 5, wobei der holographische Spiegel (64) aus einem Film gebildet ist, der über seinen Großteil Bragg'sche Spiegel aufweist.

7. Vorrichtung nach einem der Ansprüche 1 bis 6, wobei der holographische Spiegel (64) aus einem Film gebildet ist, der über seinen Großteil Fabry-Pérot-artige Hohlräume aufweist.

8. Vorrichtung nach einem der Ansprüche 1 bis 7, wobei der absorbierende Schirm (68) ein schwarzer Schirm ist.

9. Vorrichtung nach einem der Ansprüche 1 bis 8, die ferner Folgendes aufweist: Eine Einheit (50), die die mobile Lichtquelle (66) besitzt, den holographischen Spiegel (64) und den absorbierenden Schirm (68), der darin integriert ist, wobei eine Öffnung in der Einheit (50) definiert ist, und wobei der durchlässige Diffusor (60) an der Ebene der Öffnung platziert ist.

10. Vorrichtung nach einem der Ansprüche 1 bis 9, wobei der durchlässige Diffusor (60) eine gebogene Oberfläche besitzt.

11. Vorrichtung nach einem der Ansprüche 1 bis 10, wobei der durchlässige Diffusor (60) ein holographischer Diffusor ist.

12. Ein Fahrzeug, das eine Mittelkonsole aufweist, welche die Vorrichtung nach einem der Ansprüche 1 bis 11 darin integriert besitzt.

## Claims

1. A rear-projection display device comprising a mobile light source (66) supplying a light beam of at least one wavelength, a holographic mirror (64) reflecting only said at least one wavelength, an absorbent screen (68), and a transmissive diffuser (60), the absorbent screen (68) being placed on the rear surface of the holographic mirror (64), the elements being arranged so that the beam from the light source (66) is reflected on the holographic mirror (64) to scan the surface of the transmissive diffuser (60).

2. The device of claim 1, wherein the light source (66) is a laser source.

3. The device of claim 1 or 2, further comprising a planar mirror (62) on the path of the light beam between the source (66) and the holographic mirror (64).

4. The device of any of claims 1 to 3, wherein the light source (66) supplies a light beam at a first red wavelength, a second blue wavelength, and a third green wavelength.

5. The device of any of claims 1 to 4, wherein the light source (66) is assembled to be mobile along two axes.

6. The device of any of claims 1 to 5, wherein the holographic mirror (64) is formed of a film comprising, across its bulk, Bragg mirrors.

7. The device of any of claims 1 to 6, wherein the holographic mirror (64) is formed of a film comprising, across its bulk, Fabry Pérot-type cavities.

8. The device of any of claims 1 to 7, wherein the absorbent screen (68) is a black screen.

9. The device of any of claims 1 to 8, further comprising a package (50) having the mobile light source (66), the holographic mirror (64), and the absorbent screen (68) integrated therein, an opening being defined in the package (50), the transmissive diffuser (60) being placed at the level of said opening.

10. The device of any of claims 1 to 9, wherein the transmissive diffuser (60) has a curved surface.

11. The device of any of claims 1 to 10, wherein the transmissive diffuser (60) is a holographic diffuser.

12. A vehicle comprising a central console having the device of any of claims 1 to 11 integrated therein.
